# EUROPEAN PATENT APPLICATION

(11) **EP 4 718 553 A1**
(43) Date of publication of application: **01.04.2026**
(21) Application number: 25204332.8
(22) Date of filing: 24.09.2025
(51) Int. Cl.: H01M 10/04, H01M 10/42, G06Q 50/04

(54) **ELECTRODE ASSEMBLY INSPECTION DEVICE AND ELECTRODE ASSEMBLY MANUFACTURING APPARATUS INCLUDING THE SAME**

(30) Priority: 26.09.2024 KR 20240130980
(71) Applicant: SAMSUNG SDI CO., LTD., Yongin-si, Gyeonggi-do 17084 (KR)
(72) Inventor: KIM, Hye Lynn, 16678 Gyeonggi-do (KR)
(74) Representative: Bardehle Pagenberg Partnerschaft mbB Patentanwälte Rechtsanwälte

(57) **Abstract**

An electrode assembly inspection device includes a communication unit configured to collect process data, and a processor configured to modify at least one related factor based on the process data and to model a prediction model that predicts a quality of an electrode assembly based on the modified at least one related factor.

## Description

### BACKGROUND

### 1. Field

Aspects of the present disclosure relate to an electrode assembly inspection device and an electrode assembly manufacturing apparatus including the same.

### 2. Description of the Related Art

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders, and high-capacity secondary batteries are widely used as motor driving power sources, power storage batteries, and the like in hybrid vehicles, electric vehicles, and the like. These secondary batteries include an electrode assembly including a positive electrode and/or a negative electrode, a case that accommodates the electrode assembly, and an electrode terminal connected to the electrode assembly.

The electrode assembly is formed by winding and /or stacking a negative electrode, a positive electrode, and a separator located between the negative electrode and the positive electrode. For example, the electrode assembly is formed by stacking a plurality of positive electrodes and negative electrodes or winding the positive electrodes and the negative electrodes.

When the electrode assembly is formed by winding, as the positive electrode, the negative electrode, and the separator are wound while a front end is fixed to a mandrel and then the mandrel is removed, an electrode assembly having a jellyroll shape can be formed.

In such examples, a miss winding problem can occur while the electrode is formed by winding. In some examples, the alignment of the electrode assembly can be disturbed after winding. In such examples, the capacity of the secondary battery can be reduced by a short circuit occurring between electrodes or the electrode assembly being damaged.

The above-described information disclosed in the background technology of the present disclosure is only for improving understanding of the background of the present disclosure, and accordingly, may include information that does not constitute the related art.

### SUMMARY

The present disclosure is directed to providing an electrode assembly inspection device and/or an electrode assembly manufacturing apparatus that predicts the quality characteristics of a winding process.

However, technical problems to be solved by the present disclosure are not limited to the above-described problems, and other problems, which are not mentioned, will be clearly understood by those skilled in the art from the description of the invention disclosed below.

According to some aspects of the present disclosure, there is provided an electrode assembly inspection device including: a communication unit configured to collect process data; and a processor configured to modify at least one related factor based on the process data and to model a prediction model that predicts a quality of an electrode assembly based on the modified at least one related factor.

In some examples, the processor is configured to preprocess the process data and to modify the at least one related factor based on the preprocessed process data.

In some examples, the at least one related factor includes: at least one semi-finished product characteristic factor that represents characteristics of a semi-finished product; and/or at least one process factor that influences the at least one semi-finished product characteristic factor.

In some examples, the processor is configured to determine at least one major influential process factor among a plurality of process factors through a machine learning model.

In some examples, the processor is configured to modify the at least one major influential process factor, to modify the at least one semi-finished product characteristic factor based on the modified at least one major influential process factor, and to model the prediction model based on the modified at least one semi-finished product characteristic factor.

In some examples, the at least one semi-finished product characteristic factor includes at least one of a size, a weight, whether a short circuit has occurred, and miss winding of the electrode assembly.

In some examples, the processor is configured to derive a result of predicting the quality of the electrode assembly through the prediction model.

According to some aspects of the present disclosure, there is provided an electrode assembly inspection device including: a communication unit configured to collect process data; and a processor configured to modify a process factor based on the process data, to modify a miss winding factor based on the modified process factor, and to model a prediction model that predicts a quality of an electrode assembly based on the modified miss winding factor.

In some examples, the processor is configured to preprocess the process data and to modify the process factor based on the preprocessed process data.

In some examples, the process factor includes a position factor, and the processor is configured to determine whether the process data includes a position setting value, and to modify the position factor based on the position setting value in response to determining that the process data includes the position setting value.

In some examples, the miss winding factor includes alignment values of the electrode assembly.

In some examples, the processor is configured to determine a maximum value and a minimum value of the alignment values of the electrode assembly, and to divide the minimum value by the maximum value to modify the miss winding factor.

In some examples, the processor is configured to add information on a position where a magnitude of the modified miss winding factor is smallest to the process factor.

In some examples, the processor is configured to derive a result of predicting the quality of the electrode assembly through the prediction model.

According to some aspects of the present disclosure, there is provided an electrode assembly manufacturing apparatus including: a winding roller configured to wind electrodes and a separator, which are stacked, to form an electrode assembly; and an electrode assembly inspection device configured to inspect miss winding of the electrode assembly, wherein the electrode assembly inspection device includes: a communication unit configured to collect process data; and a processor configured to modify a process factor based on the process data, to modify a miss winding factor based on the modified process factor, and to model a prediction model that predicts a quality of the electrode assembly based on the modified miss winding factor.

In some examples, the process factor includes a position factor, and the processor is configured to determine whether the process data includes a position setting value, and to modify the position factor based on the position setting value in response to determining that the process data includes the position setting value.

In some examples, the miss winding factor includes alignment values of the electrode assembly.

In some examples, the processor is configured to determine a maximum value and a minimum value of the alignment values of the electrode assembly, and to divide the minimum value by the maximum value to modify the miss winding factor.

In some examples, the processor is configured to add information on a position where a magnitude of the modified miss winding factor is smallest to the process factor.

In some examples, the processor is configured to derive a result of predicting the quality of the electrode assembly through the prediction model, and to control the winding roller according to the derived result.

### BRIEF DESCRIPTION OF THE DRAWINGS

The following drawings attached to this specification illustrate preferred examples of the present invention and, together with the detailed description of the invention to be described below, serve to further understand the technical idea of the present invention, and therefore the present invention should not be construed as being limited to matters described in such drawings, in which:
FIG. 1 is a cross-sectional view schematically illustrating a secondary battery according to some aspects of the present disclosure;
FIG. 2 is a block diagram illustrating the components of an electrode assembly inspection device according to some aspects of the present disclosure;
FIG. 3 is a flowchart for describing the operation of the electrode assembly inspection device according to some aspects of the present disclosure;
FIG. 4 is a flowchart for describing the operation of the electrode assembly inspection device according to some aspects of the present disclosure;
FIG. 5 is a perspective view schematically illustrating an electrode assembly according to some aspects of the present disclosure;
FIG. 6 is a view schematically illustrating a cross-section of the electrode assembly taken along the line A-A' in FIG. 5, according to some aspects of the present disclosure;
FIG. 7 is a flowchart for describing the operation of the electrode assembly inspection device according to some aspects of the present disclosure;
FIG. 8 is a view for describing a modification of a miss winding factor described in FIG. 7, according to some aspects of the present disclosure; and
FIG. 9 is a block diagram illustrating the components of an electrode assembly manufacturing apparatus according to some aspects of the present disclosure.

### DETAILED DESCRIPTION

Hereinafter, examples of the present disclosure will be described in detail. The present disclosure is only defined by the scope of the independent claims.

Unless otherwise specifically mentioned in the present specification, a case in which a part such as a layer, a film, a region, a plate, or the like is "on" another part includes not only a case in which the part is "directly on" another part, but also a case in which there is still another part therebetween.

Unless otherwise specifically mentioned in the present specification, a singular form may also include a plural form. In addition, unless otherwise specifically mentioned, "A or B" may mean "including A, including B, or including A and B".

In the present specification, "a combinations thereof" may mean a mixture, a laminate, a compound, a copolymer, an alloy, a blend, and a reaction product of compositions.

Unless otherwise separately defined in the present specification, a particle diameter may be an average particle diameter. The particle diameter also means an average particle diameter (D50), which is an average of diameters of particles with a cumulative volume of 50% by volume in the particle size distribution. The average particle diameter (D50) may be measured by methods widely known to those skilled in the art, for example, by a particle size analyzer, or may be measured by transmission electron micrographs or scanning electron micrographs. In some examples, the average particle diameter (D50) may be acquired by measuring the average particle diameter (D50) using a measurement device using a dynamic light scattering method, performing data analysis to count the number of particles in each particle size range, and then calculating the average particle diameter (D50) therefrom. In some examples, the average particle diameter (D50) may be measured using a laser diffraction method. When the average particle diameter (D50) is measured using the laser diffraction method, more specifically, after dispersing the particles to be measured in a dispersion medium and then introducing the particles into a commercially available laser diffraction particle size measurement device (e.g., Microtrac MT 3000) and irradiating ultrasonic waves of about 28 kHz at power of 60 W, the average particle size (D50) based on 50% of the particle size distribution in the measurement device may be calculated.

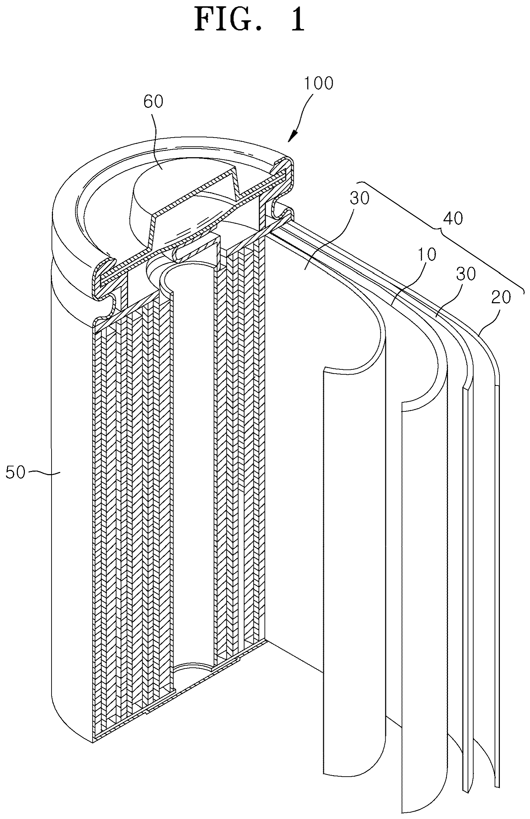

FIG. 1 is a cross-sectional view schematically illustrating a secondary battery according to some aspects of the present disclosure.

The secondary battery 100 may be classified into a cylindrical type, a prismatic type, a pouch type, a coin type, or the like according to its shape. FIG. 1 is a view schematically illustrating a secondary battery according to some aspects of the present disclosure, and may be referred to as a cylindrical battery shape.

The secondary battery 100 may include an electrode assembly 40 in which a separator 30 is interposed between a positive electrode 10 and a negative electrode 20, and a case 50 in which the electrode assembly 40 is positioned. The positive electrode 10, the negative electrode 20, and the separator 30 may be impregnated with an electrolyte. As shown in FIG. 1, the secondary battery 100 may include a sealing member 60 that seals the case 50.

A compound capable of reversibly intercalating and deintercalating lithium (e.g., a lithiated intercalation compound) may be used as the positive electrode active material. For example, one or more types of a composite oxide of lithium and a metal selected from cobalt, manganese, nickel, and a combination thereof may be used.

The composite oxide may be a lithium transition metal composite oxide, and specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any one of chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5,0<α<2); LiₐNi_{b}Co_{c}L¹_{d}GₑO₂ (0.90≤a≤1.8, 0≤b≤0.9, 0≤c≤0.5,0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G₄PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L1 is Mn, Al, or a combination thereof.

For example, the positive electrode active material may be a high nickel-based positive electrode active material having a nickel content of 80 mol% or more, 85 mol% or more, 90 mol% or more, 91 mol% or more, or 94 mol% or more and 99 mol% or less based on 100 mol% of metal excluding lithium in the lithium transition metal composite oxide. The high nickel-based positive electrode active material may implement a high capacity, and thus may be applied to high capacity, high density secondary batteries.

The positive electrode 10 for the secondary battery 100 may include a current collector and a positive electrode active material layer formed on the current collector. The positive electrode active material layer may include a positive electrode active material and further include a binder and/or a conductive material.

For example, the positive electrode may further include an additive capable of serving as a sacrificial positive electrode.

A content of the positive electrode active material may be 90% to 99.5% by weight based on 100% by weight of the positive electrode active material layer and a content of the binder and the conductive material may each be 0.5% to 5% by weight based on 100% by weight of the positive electrode active material layer.

The binder serves to attach particles constituting the positive electrode active material to each other well, and also attach the positive electrode active material to the current collector well. Representative examples of the binder may include polyvinyl alcohol, carboxymethylcellulose, hydroxypropylcellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but are not limited thereto.

The conductive material is used to impart conductivity to the electrode, and any material that does not cause a chemical change and is electronically conductive may be used. Examples of the conductive material may include a carbon-based material such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

Artificial intelligence (AI) may be used as the current collector, but the current collector is not limited thereto.

The negative electrode active material includes a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or Sn-based negative electrode active material may be used as the material capable of doping and dedoping the lithium. The Si-based negative electrode active material may include silicon, a silicon-carbon composite, SiOₓ (0 < x < 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some aspects, the silicon-carbon composite may be in the form of silicon particles whose surfaces are coated with amorphous carbon. For example, the silicon-carbon composite may include a secondary particle (e.g., a core) in which silicon primary particles are assembled, and an amorphous carbon coating layer (e.g., a shell) located on the surface of the secondary particle. The amorphous carbon may also be located between the silicon primary particles, and for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

The negative electrode 20 for the secondary battery 100 may include a current collector and a negative electrode active material layer located on the current collector. The negative electrode active material layer may include a negative electrode active material and further include a binder and/or a conductive material.

For example, the negative electrode active material layer may include the negative electrode active material in an amount of 90% to 99.5% by weight, the binder in an amount of 0.5% to 5% by weight, and the conductive material in an amount of 0% to 5% by weight.

The binder serves to attach particles constituting the negative electrode active material to each other well, and also attach the negative electrode active material to the current collector well. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound capable of imparting viscosity may be further included. As the cellulose-based compound, one or more types of carboxymethyl cellulose, hydroxypropylmethyl cellulose, methyl cellulose, and alkali metal salts thereof may be used in combination. Na, K, or Li may be used as the alkali metal.

The dry binder is a polymer material that may be fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material that does not cause a chemical change and is electronically conductive may be used. Specific examples of the conductive material may include a carbon-based material such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

The electrolyte for the secondary battery 100 includes a non-aqueous organic solvent and a lithium salt.

The non-aqueous organic solvent serves as a medium through which ions involved in an electrochemical reaction of the battery may move.

The non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, tetrahydrofuran, or the like may be used. Further, as the ketone-based solvent, cyclohexanone may be used. As the alcohol-based solvent, ethyl alcohol, isopropyl alcohol, or the like may be used, and as the aprotic solvent, nitriles such as R-CN (R is a linear, branched, or cyclic hydrocarbon group having 2 to 20 carbon atoms and may include double bonds, an aromatic ring, or an ether group) and the like, amides such as dimethylformamide and the like, dioxolanes such as 1,3-dioxolane, 1,4-dioxolane, and the like, sulfolanes, and the like may be used.

The non-aqueous organic solvent may be used alone or in a mixture of two or more.

Further, when the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material that dissolves in an organic solvent and serves as a source of lithium ions in the battery to enable the basic operation of a secondary battery and promote the movement of lithium ions between the positive electrode and the negative electrode. Representative examples of the lithium salts may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

The separator 30 may be present between the positive electrode 10 and the negative electrode 20 depending on the type of secondary battery 100. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 30 may include a porous substrate and a coating layer containing an organic material, an inorganic material, or a combination thereof located on one surface or both surfaces of the porous substrate.

The porous substrate may be a polymer film formed of one polymer selected from polyolefins such as polyethylene and polypropylene, polyesters such as polyethylene terephthalate and polybutylene terephthalate, polyacetal, polyamide, polyimide, polycarbonate, polyether ketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, Teflon, and polytetrafluoroethylene or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

As described above, the electrode assembly 40 may be formed by stacking the positive electrode 10, the negative electrode 20, and the separator 30 to form a stack or by winding the positive electrode 10, the negative electrode 20, and the separator 30 to form a jellyroll. Hereinafter, an example in which the electrode assembly 40 is wound to form a jellyroll will be described, but some aspects of the present disclosure and/or an object according to some aspects of the present disclosure are/is not limited to the jellyroll-shaped electrode assembly 40.

The electrode assembly 40 may be formed through various processes. In order to fundamentally improve (e.g., optimize) a process of manufacturing the electrode assembly 40, it is necessary to predict the quality characteristics of the manufacturing process of the electrode assembly 40.

Hereinafter, a method of predicting the quality characteristics of the electrode assembly 40 in advance before producing the electrode assembly 40 to reduce losses occurring due to defects, produce a semi-finished product of better quality, and/or furthermore, enhance the quality of a final product (e.g., including the secondary battery 100) will be described.

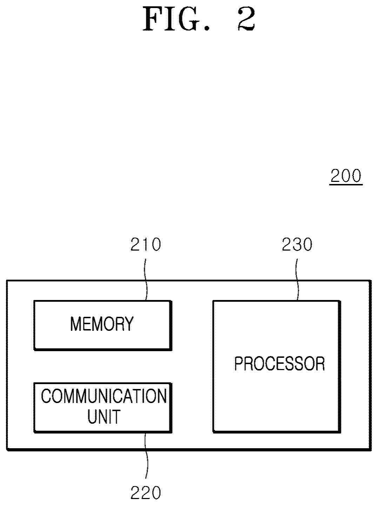

FIG. 2 is a block diagram illustrating the components of an electrode assembly inspection device according to some aspects of the present disclosure.

In FIG. 2, 200 represents an electrode assembly inspection device 200 according to some aspects of the present disclosure. The electrode assembly inspection device 200 may predict the quality of the electrode assembly 40. Further, the electrode assembly inspection device 200 may evaluate the quality of a semi-finished product generated from various unit processes of manufacturing the electrode assembly 40.

To this end, the electrode assembly inspection device 200 includes a communication unit 220 and a processor 230. Further, the electrode assembly inspection device 200 may further include a memory 210. However, the components of the electrode assembly inspection device 200 are not limited to those shown in FIG. 2, and may include all or only a part of the components shown in FIG. 2. Further, the electrode assembly inspection device 200 may further include components not shown in FIG. 2.

The memory 210 stores commands utilized to drive the electrode assembly inspection device 200. In some examples, the memory 210 may store, for example, data generated by the electrode assembly inspection device 200.

The memory 210 may be built into the electrode assembly inspection device 200. In some examples, the memory 210 is located outside the electrode assembly inspection device 200 and communicates with each of the components included in the electrode assembly inspection device 200 through the communication unit 220. The memory 210 includes, for example, a volatile memory or non-volatile memory. The memory 210 may include, for example, a central processing unit (CPU), a cache, a dynamic random access memory (DRAM), a persistent memory, a flash solid state drive (SSD), a hard disk drive (HDD), a compact disc/digital versatile disc (CD/DVD), a cloud server, and the like.

The communication unit 220 may enable the electrode assembly inspection device 200 to transmit and receive data with an external server, an external device, and the like. For example, the communication unit 220 may transmit and receive data in a wired or wireless manner. For example, the communication unit 220 may transmit and receive data over a short distance or long distance.

The communication unit 220 collects process data. For example, the communication unit 220 may receive process data from an external server and/or an external device. In some examples, the electrode assembly inspection device 200 may further include a crawling unit, which crawls the external server and/or the external device, and the communication unit 220 may collect data acquired by the crawling unit.

In such examples, the process data may include data related to the quality of the electrode assembly 40, which may be acquired during the manufacturing process of the electrode assembly 40.

For example, the manufacturing process of the electrode assembly 40 includes an electrode process, an assembly process, and/or an activation process. In some examples, data that may be acquired in the electrode process may include a loading amount of electrode material per unit area, a size and thickness of the electrode, and the like. In some examples, data that may be acquired in the assembly process includes a loading method of a positive electrode, a separator, and a negative electrode, an amount of an electrolyte, and the like. In some examples, data that may be acquired in the activation process includes the number of charge/discharge cycles, a temperature and pressure during charging/discharging, and the like. However, the process data described through some aspects of the present disclosure is not limited thereto, and the process data includes all data that may be acquired during the manufacturing process of the electrode assembly 40 and/or the secondary battery 100.

The processor 230 controls all or part of the components included in the electrode assembly inspection device 200. The processor 230 may be built into the electrode assembly inspection device 200. In some examples, the processor 230 may be located outside the electrode assembly inspection device 200 and control each of the components included in the electrode assembly inspection device 200 through the communication unit 220.

The processor 230 includes, for example, a central processing unit (CPU), a micro-processor unit (MPU), a microcontroller unit (MCU), a graphics processing unit (GPU), a digital signal processor (DSP), a floating-point unit (FPU), an application specific integrated circuit (ASIC), a field programmable gate array (FPGA), and/or the like.

In some examples, the processor 230 modifies at least one related factor based on the process data and models a prediction model, which predicts the quality of the electrode assembly 40 based on the modified at least one related factor.

A related factor is a factor related to predicting the quality of the electrode assembly 40. The at least one related factor may include, for example, a semi-finished product characteristic factor, which represents a factor for the quality to be predicted. Further, the at least one related factor may include, for example, a process factor, which influences the semi-finished product characteristic factor. In such examples, the process factor may be substituted with a process variable, which influences the semi-finished product characteristic factor.

As described above, various manufacturing processes are performed to manufacture the electrode assembly 40. Accordingly, the number of related factors is bound to be large, and these related factors have complicated correlations with each other. Accordingly, it is difficult to predict the quality of the electrode assembly 40 by simply modeling the data for the related factors.

The processor 230 according to some aspects of the present disclosure solves the above-described problems by modifying the related factor and modeling the prediction model.

For example, the processor 230 modifies the process factor, which influences the semi-finished product characteristic factor. In some examples, the processor 230 modifies the semi-finished product characteristic factor.

The processor 230 models a prediction model capable of predicting the quality of the electrode assembly 40 based on the related factor modified in this way. Further, the processor 230 may derive a result of predicting the quality of the electrode assembly 40 through the modeled prediction model.

Through this configuration, the electrode assembly inspection device 200 according to some aspects of the present disclosure may provide a prediction model having high accuracy. Further, the electrode assembly inspection device 200 may predict the quality of the electrode assembly 40 and/or inspect the quality of the electrode assembly 40 through this prediction model.

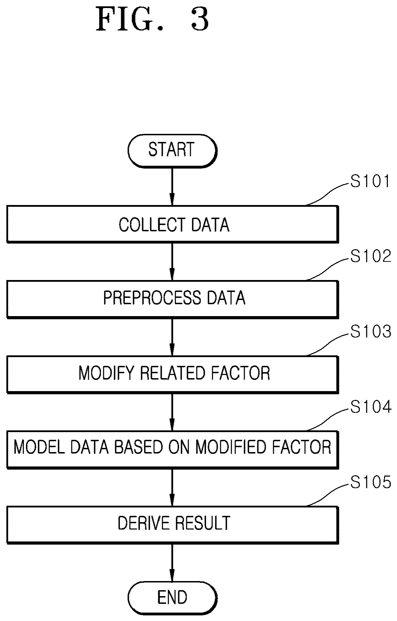

FIG. 3 is a flowchart for describing the operation of the electrode assembly inspection device according to some aspects of the present disclosure.

FIG. 3 describes the operation of the electrode assembly inspection device 200 according to some aspects of the present disclosure described in FIG. 2.

The electrode assembly inspection device 200 according to some aspects of the present disclosure collects process data (S101).

For example, the communication unit 220 collects the process data by receiving data from an external server and/or an external device. In some examples, the processor 230 collects the process data by loading data from the memory 210. In some examples, an input unit, the communication unit 220, and/or the processor 230 collect the process data by receiving data from a user. In some examples, a sensor collects the process data by sensing data from the electrode assembly 40. In some examples, the sensor collects the process data by sensing the data from the electrode assembly 40.

The process data is data that may be acquired from one or more unit processes performed in the manufacturing process of the electrode assembly 40. The process data includes, for example, the process data described in FIG. 2. The process data includes, for example, internal and/or external features of the semi-finished product acquired in each unit process. The process data includes, for example, an equipment value adjusted to control each unit process.

The process data includes, for example, data related to the electrode assembly 40, which may be acquired in a winding process. The process data includes, for example, data in the form of images, such as an X-ray image, a vision image (a two-dimensional (2D) image), a three-dimensional (3D) image, a video image, and the like of the electrode assembly 40. The data in the form of images includes, for example, an image that represents the alignment of the electrode assembly 40. Further, the process data may include a value into which the data in the form of images is numerically converted. The numerically converted value includes, for example, a value in which the alignment is numerically represented.

The electrode assembly inspection device 200 according to some aspects of the present disclosure preprocesses data (S102).

The processor 230 preprocesses the process data. For example, the processor 230 determines and/or processes an outlier. In some examples, the processor 230 processes a missing value. However, a preprocessing method performed by the processor 230 is not limited thereto. For an example in which the processor 230 preprocesses the process data, a case in which the processor 230 determines and/or processes the outlier will be described as an example.

For example, when the process data is normally distributed, the processor 230 determines an outlier through the application of standard deviation. In some examples, when the process data is not normally distributed and/or is biased, the processor 230 may determine an outlier through the interquartile range (IQR) of the process data. In some examples, the processor 230 may determine an outlier in a high dimensional data set using an unsupervised learning algorithm of a decision tree series. In some examples, the processor 230 may determine data not included in a cluster as an outlier using a density-based clustering algorithm.

For example, the processor 230 may set an upper limit value and/or a lower limit value in the process data, and may respectively replace an outlier that is greater than the upper limit value and an outlier that is smaller than the lower limit value with the upper limit value and lower limit value. In some examples, the processor 230 may determine an average and a standard deviation in the process data and may correct the outlier by using the average and the standard deviation. In some examples, the processor 230 may determine the median and the deviation in the process data and replace the outlier with a value greater than the median by n deviations. In some examples, the processor 230 may remove the outlier from the data.

The electrode assembly inspection device 200 according to some aspects of the present disclosure modifies a related factor (S103).

The processor 230 modifies the related factor based on the preprocessed process data.

In such examples, as described in FIG. 2, the related factor includes one or more semi-finished product characteristic factors and/or a plurality of process factors.

The semi-finished product characteristic factor is a factor, which represents the characteristics of the semi-finished product. The electrode assembly 40 goes through one or more unit processes to be manufactured. In each unit process, a semi-finished product is manufactured. The semi-finished product characteristic factor is a factor that represents the characteristics of this semi-finished product. For example, the semi-finished product characteristic factor may vary for each unit process, and there may be two or more semi-finished product characteristic factors for each unit process.

For example, when the unit process includes a winding process, the semi-finished product characteristic factor may include a miss winding factor. In such examples, the miss winding factor is, for example, a characteristic that checks the alignment between the positive electrode 10, the separator 30, and the negative electrode 20 when the electrodes and/or the separator are stacked on top of one another in multiple layers.

However, the semi-finished product characteristic factor is not limited thereto, and the semi-finished product characteristic factor may include, for example, the size, the weight, whether a short circuit has occurred, occurrence of miss winding, and/or the like of the electrode assembly 40.

The process factor is a factor that influences the semi-finished product characteristic factor. For example, the process factor may include an equipment value adjusted to control the semi-finished product characteristic factor.

For example, when the unit process includes the winding process, the process factor may include a position factor. In such examples, the position factor may include a value that is set and/or measured to align the electrode assembly 40.

However, the process factor is not limited thereto, and the process factor may include all or part of the factors that influence the semi-finished product characteristic factor.

For example, the processor 230 modifies the related factor in consideration of the physical meaning of each related factor. The processor 230 may modify the related factor so that the related factor may describe the unit process better.

The electrode assembly inspection device 200 according to some aspects of the present disclosure models data based on the modified factor (S104).

The processor 230 models a prediction model based on the modified semi-finished product characteristic factor. For example, the processor 230 models a prediction model using machine learning techniques. The machine learning techniques are not limited to a specific model, and all applicable forms, for example, linear learning, nonlinear learning, cluster modeling, deep learning, ensemble learning, and the like may be employed.

In such examples, the processor 230 may model a prediction model through various suitable machine learning techniques, and select and use a prediction model with the highest accuracy among the prediction models.

For example, the processor 230 may model a prediction model through various machine learning techniques including at least two or more of linear learning, nonlinear learning, cluster modeling, deep learning, ensemble learning, and the like.

In some examples, the processor 230 may determine the accuracy of the modeled prediction model. In such examples, the accuracy indicators are based on at least one of a coefficient of determination (R squared, R²), a mean absolute error (MAE), a root mean square error (RMSE), a mean absolute percentage error (MAPE), a root mean standard deviation ratio (RMSD), a ratio of RMSE to the standard deviation of the observation (RSR), Nash-Sutcliff efficiency (NSE), and an error rate. The processor 230 may determine one accuracy indicator among the accuracy indicators based on the prediction purpose. In some examples, the processor 230 may determine the accuracy of the prediction model using an average of a plurality of accuracy indicators.

For example, the processor 230 may determine the accuracy of each prediction model modeled through various suitable machine learning techniques. The processor 230 may select a prediction model with the highest accuracy and apply the prediction model to predict the quality of the electrode assembly 40.

The electrode assembly inspection device 200 according to some aspects of the present disclosure derives a result (S105).

The processor 230 derives a result of predicting the quality of the electrode assembly 40 through the prediction model modeled in S104. For example, the processor 230 may predict the quality of the electrode assembly 40 using the prediction model.

Through this method, the electrode assembly inspection device 200 according to some aspects of the present disclosure may provide a prediction model with high accuracy. Further, the electrode assembly inspection device 200 may predict the quality of the electrode assembly 40 using the prediction model and inspect the electrode assembly 40.

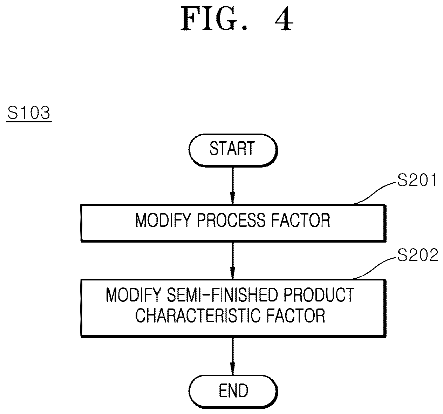

FIG. 4 is a flowchart for describing the operation of the electrode assembly inspection device according to some aspects of the present disclosure.

FIG. 4 describes S103 described in FIG. 3 in more detail. As described in FIG. 3, the processor 230 modifies the related factor based on the preprocessed process data.

For example, the electrode assembly inspection device 200 according to some aspects of the present disclosure modifies the process factor (S201).

As described above, a plurality of unit processes are performed to manufacture the electrode assembly 40. In such examples, as each of the unit processes is performed, a semi-finished product manufactured in the unit process may be generated.

The processor 230 determines the unit process in which the semi-finished product whose quality is to be predicted is generated. The processor 230 determines the process factor that influences the unit process (and/or the semi-finished product). Hereinafter, the process factor that influences the unit process among the process factors may be referred to as a "major influencing process factor."

For example, the processor 230 determines at least one major influencing process factor among the plurality of process factors through a machine learning model. In such examples, the machine learning model may include, for example, linear learning, nonlinear learning, cluster modeling, deep learning, ensemble learning, and/or the like.

The processor 230 modifies the major influential process factor. The processor 230 modifies the major influential process factor according to the characteristics of the major influential process factor.

For example, when the major influential process factor is an edge position control (EPC) device, a position setting value (e.g., a zero set value) may be present in the EPC device. In such examples, the EPC device is a device that controls the positive electrode 10, the negative electrode 20, and/or the separator 30 so that the positive electrode 10, the negative electrode 20, and/or the separator 30 may move along a preset position and/or path when the positive electrode 10, the negative electrode 20, and/or the separator 30 moves at a high speed in the unit process. In such examples, the processor 230 may modify and use the EPC factor using this position setting value.

However, a method in which the processor 230 modifies the process factor is not limited thereto. The processor 230 may modify the process factor by reflecting the physical meaning of the process factor, and furthermore, may modify a plurality of process factors.

For example, the electrode assembly inspection device 200 according to some aspects of the present disclosure modifies the semi-finished product characteristic factor (S202).

The processor 230 modifies the semi-finished product characteristic factor based on the modified major influential process factor. For example, the processor 230 selects and/or modifies the most appropriate semi-finished product characteristic factor in consideration of the physical meaning of the semi-finished product in the unit process, consistency determination between the semi-finished product and the process data, and the like. For example, the processor 230 may select and/or modify the most appropriate semi-finished product characteristic factor in consideration of an application field, capacity, charge/discharge specifications, and the like of the semi-finished product or a final product to which the semi-finished product is applied.

Through this method, the electrode assembly inspection device 200 according to some aspects of the present disclosure may select an appropriate process factor for analyzing the semi-finished product. Further, the electrode assembly inspection device 200 may provide a method of enhancing the accuracy of the prediction model for predicting and/or inspecting the quality of the semi-finished product by modifying the process factor and the semi-finished product characteristic factor for the semi-finished product.

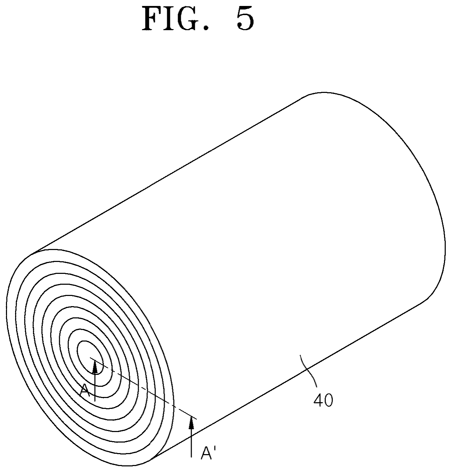

FIG. 5 is a perspective view schematically illustrating an electrode assembly according to some aspects of the present disclosure.

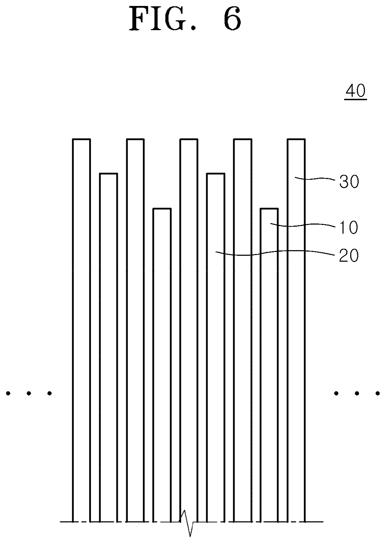

FIG. 6 is a view schematically illustrating a cross-section of the electrode assembly taken along the line A-A' in FIG. 5, according to some aspects of the present disclosure.

FIGS. 5 and 6 illustrate an electrode assembly 40.

The secondary battery 100 according to some aspects of the present disclosure includes the electrode assembly 40. The electrode assembly 40 includes an electrode laminate including a positive electrode 10, a negative electrode 20, and a separator 30 located between the positive electrode 10 and the negative electrode 20. For example, the electrode assembly 40 includes a jelly-roll type formed by winding the electrode laminate in one direction around a mandrel.

The separator 30 is located between the positive electrode 10 and the negative electrode 20 even after being wound. For example, the separator 30 is provided between the positive electrode 10 and the negative electrode 20 to prevent a short circuit from occurring between the positive electrode 10 and the negative electrode 20.

In such examples, when the positive electrode 10, the negative electrode 20, and/or the separator 30 are inaccurately wound during winding, miss winding may occur. "Miss winding" may refer to a misalignment or error during the electrode winding process. For example, as shown in FIG. 6, a separator 30 located higher than the negative electrode 20 between the positive electrode 10 and the negative electrode 20 may be provided in the electrode assembly 40. In such examples, miss winding in which the separator 30 is provided at a position where the separator 30 may not completely block (e.g., isolate) the positive electrode 10 and the negative electrode 20 may occur. In some examples, miss winding in which a height difference between the positive electrode 10, the negative electrode 20, and/or the separator 30 is outside a preset range may occur. In some examples, miss winding in which surfaces of the positive electrode 10 and/or the negative electrode 20 in contact with the separator 30 are not uniform may occur. When any type of miss winding occurs, a problem arises in that a short circuit occurs and/or the performance of the secondary battery 100 deteriorates.

Accordingly, the winding process corresponds to a very important unit process among the unit processes of manufacturing the electrode assembly 40. Further, it can also be seen that the quality of the winding process is greatly influenced by the miss winding.

Accordingly, hereinafter, a method of modeling a prediction model for a case in which the unit process corresponds to the winding process and the semi-finished product characteristic factor is a miss winding factor that represents the miss winding of the electrode assembly 40 will be described as an example.

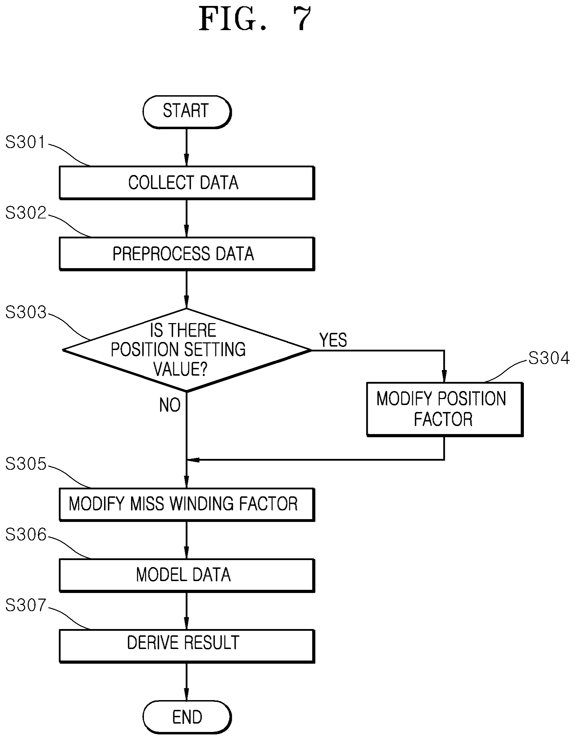

FIG. 7 is a flowchart for describing the operation of the electrode assembly inspection device according to some aspects of the present disclosure;

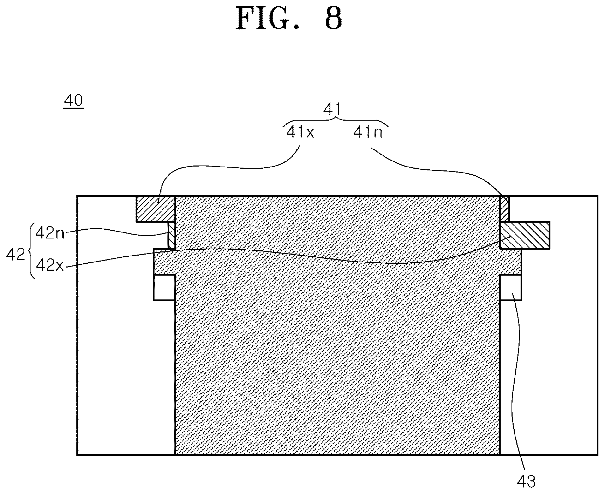

FIG. 8 is a view for describing a modification of the miss winding factor described in FIG. 7, according to some aspects of the present disclosure.

The semi-finished product characteristic factor includes, for example, a miss winding factor that represents the miss winding of the electrode assembly 40. FIGS. 7 and 8 describe an example of modeling the prediction model that predicts the miss winding by modifying the miss winding factor.

The electrode assembly inspection device 200 according to some aspects of the present disclosure includes a communication unit 220, which collects process data, and a processor 230 that modifies a process factor based on the process data, modifies a miss winding factor based on the modified process factor, and models a prediction model that predicts the miss winding of the electrode assembly based on the modified miss winding factor.

The electrode assembly inspection device 200 according to some aspects of the present disclosure collects data (S301). The description for S301 is the same as or similar to the description for S101 described in FIG. 3.

The electrode assembly inspection device 200 according to some aspects of the present disclosure preprocesses data (S302). For example, the processor 230 preprocesses process data and modifies a process factor based on the preprocessed process data. In such examples, the process factor includes, for example, a position factor. The description for S302 is the same as or similar to the description for S201 described in FIG. 3.

The electrode assembly inspection device 200 according to some aspects of the present disclosure determines whether there is a position setting value (S303).

The electrode assembly 40 may be formed as the positive electrode 10, the negative electrode 20, and the separator 30 that have been transported toward the mandrel are wound. In such examples, since each of the positive electrode 10, the negative electrode 20, and the separator 30 is transported along a preset path, the probability of miss winding occurring in the electrode assembly 40 may be reduced. Accordingly, the positive electrode 10, the negative electrode 20, and the separator 30 are required to be transported along the preset path.

The position setting value represents this preset path. The position setting value may represent one or more points. In such examples, when the positive electrode 10, the negative electrode 20, and/or the separator 30 pass through the point(s), the positive electrode 10, the negative electrode 20, and/or the separator 30 may be regarded as passing along the preset path.

For example, the processor 230 determines whether there is a position setting value that is a preset path for each of the positive electrode 10, the negative electrode 20, and/or the separator 30, or a combination thereof.

The electrode assembly inspection device 200 according to some aspects of the present disclosure modifies the position factor when it is determined that the process data includes the position setting value (S304).

The processor 230 modifies the position factor based on the position setting value when it is determined that the process data includes the position setting value. For example, the processor 230 modifies the position factor by subtracting the measured position value from the position setting value. In such examples, the measured position value is a position value of the positive electrode 10, the negative electrode 20, and/or the separator 30 measured by, for example, an edge position control (EPC) sensor, a center position control (CPC) sensor, or the like. However, the type of sensor that measures the measured position value is not limited thereto and any suitable sensor may be utilized.

For example, the position factors of the positive electrode 10, the negative electrode 20 and/or the separator 30 are very important factors in predicting miss winding. In consideration of this, the processor 230 may modify the position factors when the process data includes the position setting value.

The electrode assembly inspection device 200 according to some aspects of the present disclosure modifies the miss winding factor when it is determined that the process data does not include the position setting value, or it is determined that the process data includes the position setting value and the position factor is modified based on the position setting value (S305).

The miss winding factor may include, for example, alignment values of the electrode assembly 40. FIG. 8 illustrates these alignment values in graphical form.

In FIG. 8, 41 represents, for example, an alignment value of the positive electrode 10. In such examples, 41x represents a case in which the alignment value of the positive electrode 10 has a maximum value at one side, and 41n represents a case in which the alignment value of the positive electrode 10 has a minimum value at the other side. In FIG. 8, 42 represents an alignment value of the negative electrode 20. Here, 42x is a case in which the alignment value of the negative electrode 20 has a maximum value at one side and 42n is a case in which the alignment value of the negative electrode 20 has a minimum value at the other side. In FIG. 8, 43 represents an alignment value of the separator 30. FIG. 8 illustrates an example in which miss winding occurred in the positive electrode 10 and the negative electrode 20, and miss winding did not occur in the separator 30.

As shown in FIG. 8, the processor 230 may acquire the alignment values in an image form. In such examples, the processor 230 may modify the semi-finished product characteristic factor by converting the image form into a numerical form. In such examples, the alignment values utilized by the processor 230 may be values to which the position factor modification is applied.

For example, the processor 230 determines the maximum and minimum values of the alignment values of the electrode assembly. For example, the processor 230 determines the maximum value 41x and the minimum value 41n of the positive electrode 10. The processor 230 may modify the miss winding factor by dividing the minimum value 41n by the maximum value 41x.

The processor 230 determines a position where the magnitude of the modified miss winding factor is the smallest. The processor 230 may add information on the position where the magnitude of the modified miss winding factor is the smallest to the process factor (e.g., the position factor). Accordingly, the processor 230 may standardize the alignment values.

The electrode assembly inspection device 200, according to some aspects of the present disclosure, models data (S306). The description for S306 is the same as or similar to the description for S104 described in FIG. 3, and thus may not be repeated.

The electrode assembly inspection device 200 according to some aspects of the present disclosure derives a result (S307). The description for S307 is the same as or similar to the description for S105 described in FIG. 3.

Through this configuration, the electrode assembly inspection device 200 according to some aspects of the present disclosure may model a prediction model that may predict the miss winding of the electrode assembly 40 with high accuracy in advance. Further, the electrode assembly inspection device 200 may inspect the electrode assembly 40 by predicting the miss winding of the electrode assembly 40 in advance.

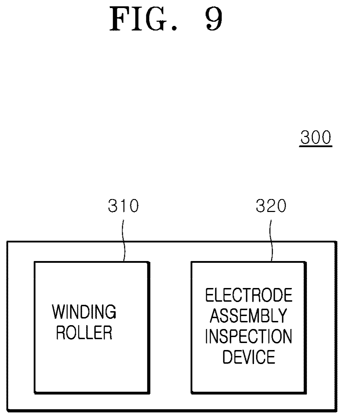

FIG. 9 is a block diagram illustrating the components of an electrode assembly manufacturing apparatus 300 according to some aspects of the present disclosure.

In FIG. 9, the reference numeral 300 represents an electrode assembly manufacturing apparatus according to some aspects of the present disclosure. The electrode assembly manufacturing apparatus 300 may predict (e.g., inspect) the quality of the electrode assembly 40 to be manufactured while manufacturing the electrode assembly 40.

To this end, the electrode assembly manufacturing apparatus 300 may include a winding roller 310 and an electrode assembly inspection device 320.

The winding roller 310 forms an electrode assembly 40 by winding the stacked positive electrode 10, negative electrode 20, and separator 30. For example, the winding roller 310 forms the electrode assembly 40 by winding the positive electrode 10, the negative electrode 20, and the separator 30 in one direction around the mandrel.

The electrode assembly inspection device 320 inspects the miss winding of the electrode assembly 40. The electrode assembly inspection device 320 is the same as or similar to the electrode assembly inspection device 200 described in, for example, FIGS. 2 to 8.

For example, the electrode assembly inspection device 320 includes a communication unit that collects process data, and a processor (e.g., including the processor 230 described in FIGS. 2 to 8), which modifies a process factor based on the process data, modifies a miss winding factor based on the modified process factor, and models a prediction model that predicts miss winding of the electrode assembly based on the modified miss winding factor.

The process factor includes, for example, a position factor.

The processor determines whether the process data includes a position setting value, and when the process data includes the position setting value, the processor modifies the position factor based on the position setting value.

The miss winding factor includes, for example, alignment values of the electrode assembly 40.

The processor determines the maximum and minimum values of the alignment values of the electrode assembly, and modifies the miss winding factor by dividing the minimum value by the maximum value.

The processor adds information on the position where the magnitude of the modified miss winding factor is the smallest to the process factor.

The processor derives a result of predicting the miss winding of the electrode assembly 40 through the prediction model. The processor controls the winding roller 310 according to the derived result. For example, the processor may predict the miss winding, and may control the winding roller 310 so that the miss winding may be reduced (e.g., minimized).

Through this configuration, the electrode assembly manufacturing apparatus 300 according to some aspects of the present disclosure may manufacture the electrode assembly 40 with enhanced quality characteristics. Further, the electrode assembly manufacturing apparatus 300 may enhance the quality of the secondary battery 100 including the electrode assembly 40. Further, the electrode assembly manufacturing apparatus 300 may enhance process quality and improve the overall process mechanism efficiency for manufacturing the electrode assembly 40.

According to some aspects of the present disclosure, an electrode assembly inspection device and/or an electrode assembly manufacturing apparatus capable of enhancing the quality of an electrode assembly manufacturing process and/or examining a process mechanism can be provided.

According to some aspects of the present disclosure, an electrode assembly inspection device and/or an electrode assembly manufacturing apparatus that reduce losses caused by defects can be provided.

According to some aspects of the present disclosure, an electrode assembly inspection device and/or an electrode assembly manufacturing apparatus that produce a semi-finished product and/or a final product with enhanced quality can be provided.

However, technical effects acquirable through the present disclosure are not limited to the above-described technical effects, and other technical effects that are not mentioned will be clearly understood by those skilled in the art from the description of the invention described below.

## Claims

1. An electrode assembly inspection device (200) comprising:
a communication unit (220) configured to collect process data; and
a processor (230) configured to modify at least one related factor based on the process data and to model a prediction model for predicting a quality of an electrode assembly based on the modified at least one related factor.

2. The electrode assembly inspection device (200) of claim 1, wherein the processor (230) is configured to preprocess the process data and to modify the at least one related factor based on the preprocessed process data.

3. The electrode assembly inspection device (200) of any preceding claim, wherein the at least one related factor comprises:
at least one semi-finished product characteristic factor that represents characteristics of a semi-finished product; and/or
at least one process factor that influences the at least one semi-finished product characteristic factor.

4. The electrode assembly inspection device (200) of claim 3, wherein the processor (230) is configured to determine at least one major influential process factor among a plurality of process factors through a machine learning model.

5. The electrode assembly inspection device (200) of claim 4, wherein the processor (230) is configured to modify the at least one major influential process factor, to modify the at least one semi-finished product characteristic factor based on the modified at least one major influential process factor, and to model the prediction model based on the modified at least one semi-finished product characteristic factor.

6. The electrode assembly inspection device (200) of one of claims 3 to 5, wherein the at least one semi-finished product characteristic factor comprises at least one of a size, a weight, whether a short circuit has occurred, and miss winding of the electrode assembly.

7. The electrode assembly inspection device (200) of any preceding claim, wherein the processor (230) is configured to derive a result of predicting the quality of the electrode assembly through the prediction model.

8. The electrode assembly inspection device (200) of any preceding claim, wherein the processor (230) is configured to modify a miss winding factor based on the modified process factor, and to model a prediction model that predicts a quality of an electrode assembly based on the modified miss winding factor.

9. The electrode assembly inspection device (200) of claim 8, wherein:
the process factor comprises a position factor, and
the processor (230) is configured to determine whether the process data comprises a position setting value, and to modify the position factor based on the position setting value in response to determining that the process data comprises the position setting value.

10. The electrode assembly inspection device (200) of claim 8 or 9, wherein the miss winding factor comprises alignment values of the electrode assembly.

11. The electrode assembly inspection device (200) of claim 10, wherein the processor (230) is configured to determine a maximum value and a minimum value of the alignment values of the electrode assembly, and to divide the minimum value by the maximum value to modify the miss winding factor.

12. The electrode assembly inspection device (200) of claim 11, wherein the processor (230) is configured to add information on a position where a magnitude of the modified miss winding factor is smallest to the process factor.

13. An electrode assembly manufacturing apparatus comprising:
a winding roller configured to wind electrodes and a separator, which are stacked, to form an electrode assembly; and
an electrode assembly inspection device (200) of any one of claims 1 to 12.

14. A method performed by an electrode assembly inspection device (200), the method comprising:
collecting (S101) process data; and
modifying (S103) at least one related factor based on the process data and modelling (S104) a prediction model that predicts a quality of an electrode assembly based on the modified at least one related factor.

15. The method of claim 14, further comprising:
preprocessing (S102) the process data; and
modifying (S103) the at least one related factor based on the preprocessed process data.
